Europäisches Patentamt

European Patent Office

Office européen des brevets

(11) Numéro de publication: **0 274 323**
**A1**

## (12) DEMANDE DE BREVET EUROPEEN

(21) Numéro de dépôt: 87402910.1

(51) Int. Cl.⁴: **G06F 7/00 , G06F 15/347**

(22) Date de dépôt: **18.12.87**

(30) Priorité: **22.12.86 FR 8617937**

(43) Date de publication de la demande:
**13.07.88 Bulletin 88/28**

(84) Etats contractants désignés:
**CH DE FR GB IT LI NL SE**

(71) Demandeur: **SGS-THOMSON
MICROELECTRONICS S.A.
101, bld Murat
F-75016 Paris(FR)**

(72) Inventeur: **Cambonie, Joel
THOMSON-CSF SCPI 19, avenue de Messine
F-75008 Paris(FR)**
Inventeur: **Artieri, Alain
THOMSON-CSF SCPI 19, avenue de Messine
F-75008 Paris(FR)**

(74) Mandataire: **Guérin, Michel et al
THOMSON-CSF SCPI 19, avenue de Messine
F-75008 Paris(FR)**

(54) **Circuit intégré de traitement de signal pour la sommation en ligne et en colonne de matrices de valeurs numériques.**

(57) L'invention concerne un circuit de traitement de signal effectuant une transformation de type cosinus (double sommation en ligne et en colonne) de valeurs d'une matrice de n lignes et n colonnes.

On propose une architecture avec un circuit de transformée ligne (CTL), un circuit de transformée colonne (CTC), et une mémoire tampon MEM de n x n mots. La mémoire est adressée sequentiellement ligne par ligne pendant le stockage de n x n coefficients $C^i$ (v) sont les résultats de la transformée ligne sur un bloc de n x n données. Puis elle est adressée sequentiellement colonne par colonne pendant le stockage de n x n coefficients $C^i$(v) correspondant au traitement du bloc suivant. A chaque adresse on effectue une phase de lecture d'une coefficient suivie d'une écriture d'un nouveau coefficient.

Application : circuit de traitement numérique d'images pour préparer la compression de données avant transmission.

# FIG_2

EP 0 274 323 A1

# CIRCUIT INTEGRE DE TRAITEMENT DE SIGNAL POUR LA SOMMATION EN LIGNE ET EN COLONNE DE MATRICES DE VALEURS NUMERIQUES

L'invention concerne l'architecture des circuits intégrés effectuant un traitement numérique de signal d'un type particulier. Plus précisément, le traitement numérique considéré ici est une double sommation pondérée, en ligne puis en colonne, de valeurs numériques $x(i,j)$ d'une matrice de $n \times n$ valeurs numériques.

A partir des coefficients $x(i,j)$ où $i$ est un indice de ligne de la matrice, et $j$ un indice de colonne, on cherche à produire une matrice de coefficients $C(u,v)$ où $u$ est un indice de ligne et $v$ un indice de colonne, avec

$$C(u,v) = \sum_{i=0}^{i=n-1} C^i(v) \; g(i,u)$$

$$\text{avec } C^i(v) = \sum_{j=0}^{j=n-1} x(i,j) \; f(j,v)$$

A partir de signaux électriques d'entrée représentant les valeurs numériques $x(i,j)$, on produit d'abord $n \times n$ signaux représentants des coefficients $C^i(v)$ ; chaque coefficient $C^i(v)$ représente une sommation pondérée des valeurs $x(i,j)$ de la ligne $i$ affectées de coefficients $f(j,v)$ ; $v$ représente un indice de colonne variant de 0 à $n-1$ et il y a $n$ coefficients $C^i(v)$ pour chaque ligne d'indice $i$. Cette opération est appelée transformation ligne.

A partir des $n \times n$ signaux représentant les coefficients $C^i(v)$, on produit $n \times n$ signaux représentant les coefficients $C(u,v)$ ; chaque coefficient $C(u,v)$ est une sommation pondérée des valeurs $C^i(v)$ de la colonne $v$, affectées de coefficients $g(i,u)$; $u$ représente un indice de ligne variant de 0 à $n-1$ et on produit $n$ coefficients $C(u,v)$ pour chaque colonne d'indice $v$. Cette opération est la transformation colonne.

Ce type de traitement numérique se rencontre notamment pour réaliser des transformations dites transformations cosinus où les coefficients $f(j,v)$ et $g(i,u)$ sont de la forme cos $(2i+1)u\pi/2n$ ; ces transformations sont utiles pour faciliter la compression d'informations dans les transmissions numériques de signaux, et plus particulièrement pour la transmission numérique d'images.

Les architectures de circuits intégrés premettant de réaliser ce type de transformation sont relativement complexes parce qu'elles doivent permettre un traitement en temps réel, c'est-à-dire que le débit de données numériques à traiter est imposé à l'entrée du circuit et le débit de données traitées à la sortie doit être aussi rapide que le débit à l'entrée. Bien entendu, ce débit est élevé et, à titre indicatif, pour la transmision numérique d'images, on veut pouvoir traiter un bloc de 16 x 16 valeurs numériques (256 points d'image) en moins de 20 microsecondes ; des blocs successifs de 256 valeurs se présentant à l'entrée du circuit avec une périodicité de l'ordre de 20 microsecondes.

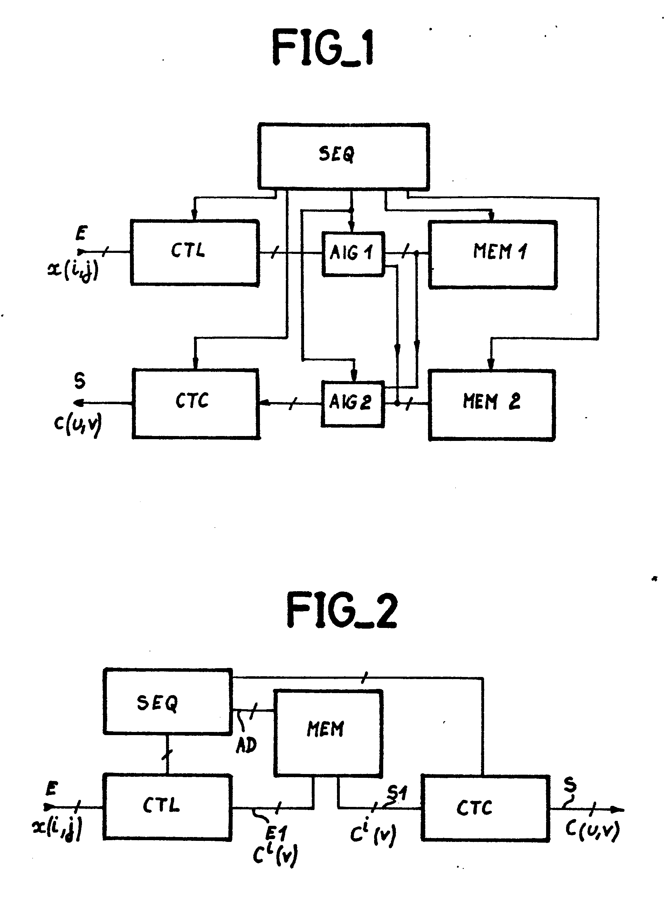

La figure 1 représente sous forme de schéma-bloc une architecture de circuit intégré assez simple que l'on peut imaginer pour réaliser sur une même puce de circuit intégré la transformation complète d'un bloc de $n \times n$ valeurs numériques $x(i,j)$ en un bloc de $n \times n$ coefficients $C(u,v)$.

Dans ce schéma, on utilise un premier opérateur CTL exécutant la sommation en ligne, un deuxième opérateur CTC exécutant la sommation en colonne, deux mémoires MEM 1 et MEM 2 pour le stockage de valeurs représentant les coefficients $C^i(v)$, et deux aiguillages AIG 1 et AIG 2 pour établir des chemins de connexion d'une part entre l'opérateur CTL et les mémoires MEM 1 et MEM 2 et d'autre part entre ces mémoires et l'opérateur CTC. L'ensemble est commandé par un séquenceur SEQ .

Un bloc de $n \times n$ données $x(i,j)$ à traiter est amené, par un bus d'entrée E, à l'opérateur de transformée ligne CTL qui produit $n \times n$ données numériques représentant $n \times n$ coefficients numériques $C^i(v)$. Ces données sont stockées dans les $n \times n$ adresses de la mémoire MEM 1 (mémoire de $n \times n$ mots). Le rythme de traitement des blocs de $n \times n$ données est par exemple de un bloc traité par 20 microsecondes ; une donnée $x(i,j)$ se présente par exemple toutes les 74 nanosecondes (pour $n \times n = 256$).

Pour le traitement du bloc suivant de n x n valeurs x(i,j), le circuit CTL reçoit les valeurs successives x-(i,j) et effectue la transformation ligne ; mais cette fois, le séquenceur SEQ commande l'aiguillage AIG1 de manière à stocker les résultats $C^i(v)$ dans la deuxième mémoire MEM 2. Pendant ce temps, les données précédemment enregistrées dans la mémoire MEM 1 sont appliquées à titre de valeurs numériques d'entrée à traiter, à travers l'aiguillage AIG2, au circuit de transformation colonne CTC qui produit à sa sortie les coefficients C(u,v).

Ainsi de suite, alternativement, un bloc de n x n coefficients $C^i(v)$ est stocké dans l'une des mémoires pendant qu'un bloc de coefficients $C^i(v)$ enregistré à la période précédente dans l'autre mémoire est traité.

Cette architecture est élégante mais nécessite deux mémoires capables de stocker chacune n x n données $C^i(v)$. Il faut bien comprendre en effet que pour pouvoir effectuer une transformation colonne sur les coefficents $C^i(v)$ tous les coefficients $C^i(v)$ d'une même colonne v doivent être mémorisées. Or, comme ces coefficients $C^i(v)$ arrivent du circuit CTL ligne par ligne,et non colonne par colonne,veut dire en pratique que la transformation colonne ne peut commencer que lorsque tous les coefficients $C^i(v)$ de la matrice sont arrivés du circuit CTL. C'est la raison pour laquelle l'architecture de la figure 1 utilise deux mémoires fonctionnant alternativement. De plus, il faut noter que si les données $C^i(v)$ sont inscrites dans une mémoire ligne par ligne (iétant l'indice de ligne), alors elles doivent être lues à la période suivante colonne par colonne (v étant l'indice de colonne).

L'invention proposée ici permet de se contenter d'une seule mémoire de n x n coefficients $C^i(v)$. Elle économise donc une surface importante sur la puce de circuit intégré.

Le circuit intégré de traitement numérique de signaux selon l'invention réalise, comme celui de la figure 1, une transformation de n x n signaux d'entrée représentant une matrice de valeurs numériques x(i,j) ou i est une indice de ligne et j un indice de colonne de la matrice, et il produit n x n signaux de sortie représentant des coefficients C(u,v), par une double sommation, en ligne et en colonne, de la forme :

$$C(u,v) \; = \; \sum_{i=0}^{n-1} C^i(v) \cdot g(i,u)$$

$$\text{avec} \qquad C^i(v) \; = \; \sum_{j=0}^{n-1} x(i,j) \; f(j,v)$$

Ce circuit comporte,
- un premier circuit de sommation, apte à recevoir les signaux représentant les valeurs numériques x(i,j) et à produire des signaux représentant les coefficients $C^i(v)$,
- une mémoire apte à enregistrer les signaux $C^i(v)$ puis à les restituer, l'adressage de cette mémoire étant organisé en n lignes et n colonnes,
- un deuxième circuit de sommation, apte à recevoir en succession les signaux représentant les valeurs $C^i$-(v) et à produire des signaux représentant les valeurs C (u, v),
- un séquenceur d'adressage de la mémoire, pour fournir à la mémoire des adresses succesives de données $C^i(v)$ à enregistrer en provenance du premier circuit de sommation ou à restituer vers le deuxième circuit de sommation,
- le séquenceur fournissant alternativement une succession de n x n adresses, ligne par ligne, puis une succession de n x n adresses, colonne par colonne, et une opération de lecture suivie d'une opération d'écriture étant effectuée pour chaque adresse fournie par le séquenceur.

Dans un mode de réalisation préférentiel, la mémoire comporte deux bus de données séparés, l'un pour recevoir des données du premier circuit de sommation, l'autre pour fournir des données au deuxième circuit de sommation. Dans ce cas l'opération d'écriture peut commencer alors que l'opération de lecture n'est pas tout à fait terminée.

Dans une autre réalisation, la mémoire ne comporte qu'un seul bus d'entrée/sortie de données et dans ce cas il faut s'assurer qu'on effectue la totalité de l'opération de lecture avant de commencer une opération d'écriture à la même adresse.

La mémoire est de préférence une mémoire statique (SRAM).

D'autres caractéristiques et avantages de l'invention apparaîtront à la lecture de la description détaillée qui suit et qui est faite en référence aux dessins annexés dans lesquels :

- la figure 1, déjà décrite, représente une possibilité d'architecture de circuit exécutant une double sommation, en lignes et en colonnes, de valeurs numériques ;

- la figure 2 représente l'architecture selon l'invention pour exécuter le même traitement numérique ;

- la figure 3 représente schématiquement une partie du séquenceur d'adressage, servant à alterner l'adressage ligne par ligne et l'adressage colonne par colonne.

- la figure 4 représente un diagramme termporel des signaux de lecture et écriture d'un mot de la mémoire.

A la figure 1 on voit l'architecture de circuit selon l'invention.

Les données à traiter $x(i,j)$ sont amenées successivement, par un bus d'entrée E; une donnée arrive périodiquement (période T); un bloc de $n \times n$ données arrive avec une périodicité de Tech = $n \times n \times T$.

Les données sont traitées par un premier circuit de sommation CTL effectuant une transformée ligne (sommation pondérée des données $x(i,j)$ d'une même ligne d'indice i), aboutissant à la production de $n \times n$ coefficients $C^i(v)$ sur un bus interne E1 qui relie la sortie du circuit CTL aux entrées de données d'une mèmoire MEM de $n \times n$ mots.

Les coefficients $C^i(v)$ stockés dans les $n \times n$ positions de la mémoire MEM peuvent être restitués sur un bus de sortie S1 qui relie la mémoire à un deuxième circuit de sommation CTC effectuant une transformée colonne (sommation pondérée des coefficients $C^i(v)$ d'une même colonne d'indice v). Ce deuxième circuit de sommation CTC produit des coefficients $C(u,v)$, résultats de la transformation cosinus bidimensionnelle, sur un bus de sortie S.

La mémoire et les circuits de sommation sont contrôlés par un séquenceur SEQ.

Ce séquenceur sert en particulier à définir les séquences d'adressage des différentes positions de mots de la mémoire M, lors du stockage des coefficients $C^i(v)$ et lors de leur restitution.

Les adresses de ces positions sont définies par des mots de $2k$ bits (avec $2^k = n$) fournis par le séquenceur à la mémoire sur un bus d'adresses AD.

Sur ces $2k$ bits, la moitié (c'est-à-dire les k premiers bits) définissent des poids forts de l'adresse et l'autre moitié (k bits également) des poids faibles de l'adresse.

Par commodité, on appellera adresse de ligne les k bits de pcids forts, et adresses de colonne les k bits de poids faible ; cel permet d'imaginer la mémoire comme une matrice carrée de $n \times n$ points ayant la même structure que la matrice carrée de $n \times n$ coefficients $C^i(v)$, chaque coefficient correspondant à un point. Bien entendu, la structure physique de la mémoire n'est pas forcément carrée.

Selon l'invention, le séquenceur inverse périodiquement, avec une période Tech qui est la période d'arrivée de chaque nouveau bloc de $n \times n$ données à traiter, les adresses de ligne et de colonne dans la mémoire MEM.

Autrement dit, alors que deux blocs successifs de $n \times n$ données $x(i,j)$ sont traités de manière rigoureusement identique par le circuit CTL et que leurs résultats $C^i(v)$ doivent aussi être traités de manière rigoureusement identique par le circuit CTC, on prévoit que le stockage intermédaire des coefficients $C^i(v)$ correspondant au premier bloc se fait différemment du stockage des coefficients $C^i(v)$ correspondant au bloc suivant.

Les coefficients $C^i(v)$, qui arrivent dans un certain ordre sur le bus E1, sont stockés ligne par ligne dans la mémoire si c'est le premier bloc qui est traité ; ils sont stockés colonne par colonne si c'est le deuxième bloc qui est traité ; et ainsi de suite, il y a alternance de stockage en ligne puis en colonne, bien qu'il n'y ait aucun changement dans le traitement effectué par le circuit CTL et bien que les données $x(i,j)$ arrivent dans le même ordre sur le bus E.

Ainsi, on peut supposer que les coefficients $C^i(v)$ arrivent dans l'ordre $C^0(0)$, $C^0(1)$, $C^0(2)$..... $C^0(n-1)$ puis $C^1(0)$, $C^1(1)$, ...$C^1(n-1)$ etc, et enfin $C^{n-1}(0)$, $C^{n-1}(1)$,... $C^{n-1}(n-1)$.

Cela veut dire que les coefficients de la première ligne (indice i = 0) de la matrice $C^i(v)$ arrivent d'abord, puis ceux de la deuxième ligne (i = 1), etc... puis ceux de la dernière ligne (i = n-1).

Considérons le premier bloc de coefficients traités $C^i(v)$. Il sera stocké dans la mémoire en utilisant l'indice i (indice de ligne de la matrice numérique de coefficients $C^i(v)$) comme adresse de ligne de la mémoire, et l'indice v (indice de colonne de la matrice) comme adresse de colonne de la mémoire.

Mais si c'est le deuxième bloc qui arrive, à la période Tech suivante, on utilisera l'indice de ligne i comme adresse de colonne et l'indice de colonne v comme adresse de ligne.

Comme dans les deux cas les coefficients arrivent dans le même ordre $C^0(0)$, $C^0(1)$... $C^0(n-1)$ $C^1(0)$, $C^1(1)$... $C^1(n-1)$... $C^{n-1}(0)$, $C^{n-1}(1)$, $C^{n-1}(n-1)$, c'est le séquenceur qui doit faire une modification de la séquence d'adresses successives fournies à la mémoire.

A titre d'exemple simplifié pour n = 4, le bloc traité est la matrice de coefficients suivants

$$C^0(0) \qquad C^0(1) \qquad C^0(2) \qquad C^0(3)$$
$$C^1(0) \qquad C^1(1) \qquad C^1(2) \qquad C^1(3)$$
$$C^2(0) \qquad C^2(1) \qquad C^2(2) \qquad C^2(3)$$
$$C^3(0) \qquad C^3(1) \qquad C^3(2) \qquad C^3(3)$$

En supposant que le circuit CTL fournisse les résultats $C^i(v)$ dans l'ordre indiqué ci-dessus, le stockage s'effectue comme ci-dessous pour le premier bloc traité.

| adresse dans la mémoire | | mots stockés |
|---|---|---|
| poids forts | poids faibles | |
| 00 | 00 | $C^0(0)$ |
| 00 | 01 | $C^0(1)$ |
| 00 | 10 | $C^0(2)$ |
| 00 | 11 | $C^0(3)$ |
| 01 | 00 | $C^1(0)$ |
| 01 | 01 | $C^1(1)$ |
| 01 | 10 | $C^1(2)$ |
| 01 | 11 | $C^1(3)$ |
| 10 | 00 | $C^2(0)$ |
| 10 | 01 | $C^2(1)$ |
| 10 | 10 | $C^2(2)$ |
| 10 | 11 | $C^2(3)$ |
| 11 | 00 | $C^3(0)$ |
| 11 | 01 | $C^3(1)$ |
| 11 | 10 | $C^3(2)$ |
| 11 | 11 | $C^3(3)$ |

Mais pour le deuxième bloc traité le stockage s'effectue dans l'ordre ci-dessous :

| adresse dans la mémoire | | mots stockés |
| poids forts | poids faibles | |
| --- | --- | --- |
| 00 | 00 | $C^0(0)$ |
| 01 | 00 | $C^0(1)$ |
| 10 | 00 | $C^0(2)$ |
| 11 | 00 | $C^0(3)$ |
| 00 | 01 | $C^0(0)$ |
| 01 | 01 | $C^0(1)$ |
| 10 | 01 | $C^0(2)$ |
| 11 | 01 | $C^0(3)$ |
| 00 | 10 | $C^0(0)$ |
| 01 | 10 | $C^0(1)$ |
| 10 | 10 | $C^0(2)$ |
| 11 | 10 | $C^0(3)$ |
| 00 | 11 | $C^0(0)$ |
| 01 | 11 | $C^0(1)$ |
| 10 | 11 | $C^0(2)$ |
| 11 | 11 | $C^0(3)$ |

Le tableau ci-dessus se déduit du précédent en permutant les colonnes poids faibles et poids forts. Cela revient virtuellement à stocker la matrice de coefficients $C^i(v)$ sous la forme

$$\begin{matrix} C^0(0) & C^1(0) & C^2(0) & C^3(0) \\ C^0(1) & C^1(1) & C^2(1) & C^3(1) \\ C^0(2) & C^1(2) & C^2(2) & C^3(2) \\ C^0(3) & C^1(3) & C^2(3) & C^3(3) \end{matrix}$$

Le circuit opère de la manière suivante :

Les données x(i,j) arrivent à la cadence de la période T ; les coefficients $C^i(v)$ sont produits à la même cadence et stockés dans la mémoire toujours à la même cadence. Ils sont également lus à partir de cette mémoire à la même cadence et transmis au deuxième circuit de sommation CTC qui produit les coefficients C(u,v).

A chaque période T, définissant la cadence de traitement, on exécute les deux opérations suivantes :

- lecture d'un coefficient $C^i(v)$ contenu dans la mémoire à l'adress (r, s) fournie par le séquenceur ; r représente les poids forts de l'adresse, s les poids faibles ; le mot est transmis au circuit CTC par le bus S1

- écriture à la même adresse d'un nouveau coefficient $C^i(v)$ fourni par le circuit CTL sur le bus E1.

Pendant toute une période Tech correspondant à un bloc de n x n données, les adresses (r, s) sont incrémentées de manière à effectuer un stockage ligne par ligne : s est incrémenté avec r constant, puis r est incrémenté etc...

Pendant toute la période suivante Tech, correspondant au traitement du bloc suivant, les adresses (r, s) sont incrémentées de manière à effectuer un stockage colonne par colonne : r est incrémenté avec s constant, puis s est incrémenté etc..

On aboutit au résultat que le deuxième circuit de sommation CTC voit arriver une succession de coefficients transmis colonne par colonne s'ils ont été enregistrés ligne par ligne à la période précédente et réciproquement.

Dans tous les cas on obtient que le circuit de sommation traite une matrice de coefficients colonne par colonne si cette matrice a été obtenue par une sommation ligne par ligne.

Ceci est vrai même si les résultats $C^i(v)$ du traitement par le premier circuit CTL sont produits et stockés dans un ordre autre que l'ordre banal indiqué ci-dessus (indice de colonne v croissant à i constant, puis indice i croissant).

La seule condition à respecter est qu'en principe le circuit de transformation ligne qui fournit les coefficients $C^i(v)$ ligne par ligne, établisse un ordre de ligne compatible avec l'ordre dans lequel ces coefficients, une fois prélevés par colonne, doivent être appliqués au circuit CTC. Ainsi, en supposant que la deuxième sommation exige que les 4 coefficients $C^i(v)$ de la colonne v arrivent dans un ordre brouillé $C^0$-(v), $C^1(v)$, $C^3(v)$, $C^2(v)$, alors, il faut que le circuit CTL fournisse les lignes de coefficient $C^i(v)$ dans le même ordre brouillé, à savoir successivement les lignes 0, 1, 3, 2.

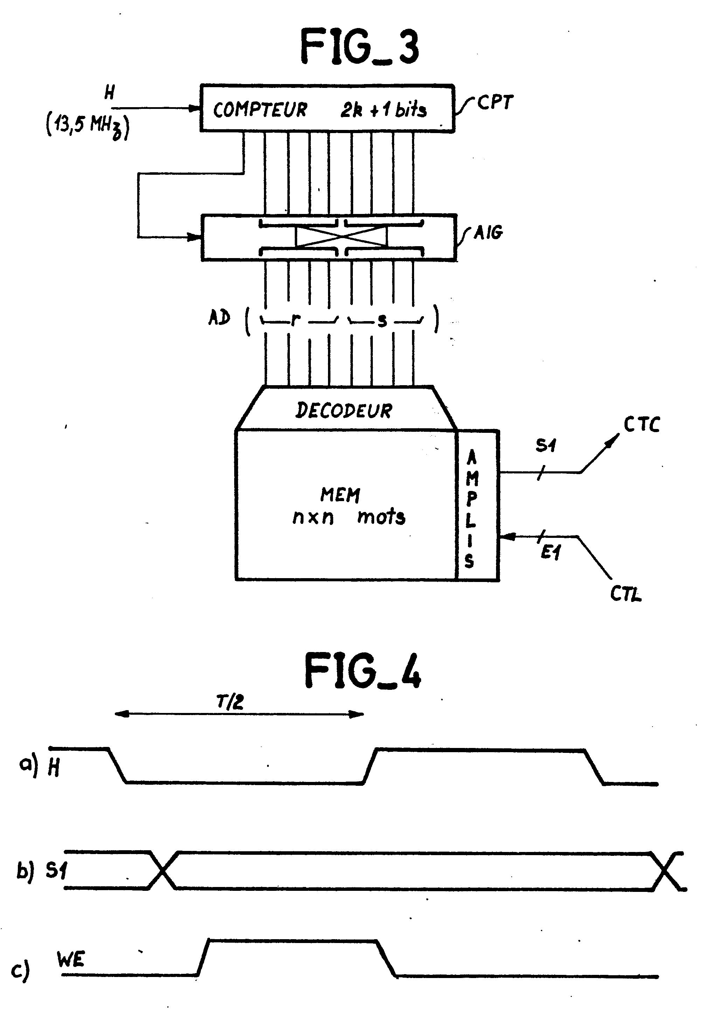

La constitution du circuit servant à fournir les adresses successives de la mémoire est extrêmement simple. Elle est visible à la figure 3.

Le séquenceur comporte essentiellement un compteur CPT de 2 k + 1 bits pour une mémoire de n x n mots avec n = $2^k$.

La sortie du poids le plus fort commande un aiguillage MUX. Cet aiguillage reçoit les 2 k autres bits, en deux groupes de k bits, le premier groupe correspondant aux poids les plus forts et le deuxième aux poids les plus faibles. L'aiguillage a 2 k sorties, et, selon l'état du bit qui le commande, il restitue sur ses sorties soit les 2 k sorties du compteur dans leur ordre naturel, soit ces 2 k sorties croisées, les k bits de poids forts devenant k bits de poids faibles et réciproquement. Les 2k sorties de l'aiguillage MUX constituent les adresses (r, s) transmises à la mémoire.

Le compteur est incrémenté par un signal d'horloge à une fréquence H correspondant à la période T d'introduction des données x(i,j) et de fourniture des résultats $C^i(v)$.

Toutes les 2 k périodes T, le séquencement des adresses est modifié.

La lecture d'un coefficient $C^i(v)$ à une adresse (r, s) et l'écriture d'un autre coefficient à la même adresse peuvent s'effectuer différemment selon les types de mémoires utilisées et notamment selon que les bus d'entrées et sortie E2 et S2 de la mémoire sont constitués par deux bus séparés ou par un bus unique multiplexé.

S'il s'agit d'un bus unique, il est nécessaire que la lecture d'un mot soit complètement effectuée et terminée avant que l'écriture d'un autre mot ne commence. Il faut donc que la somme des phases de lecture à la phase d'écriture soit contenu dans la période T. En gros, il faut que la lecture ait lieu pendant une demi-période (par exemple 37 ns) et l'écriture pendant la demi-période qui suit. Comme la lecture et l'écriture sont elles-mêmes parfois divisées en sous-phases (précharge et lecture ou écriture proprement dite), on doit disposer d'une horloge de période T/2.

Si les bus d'entrée et de sortie sont clairement séparés, un recouvrement partiel des phases de lecture et d'écriture est possible.

Les phases peuvent être celles indiquées à la figure 4.

La ligne a représente un signal d'horloge H à 13,5 Mhz dont la demi-période est T/2 = 37 ns.

Le front descendant définit le déclenchement de la phase de lecture ; une adresse (r, s) est supposée présente depuis le front montant précédent.

La ligne b représente le bus de sortie S1 : les données lues apparaissent environ 10 nanosecondes après le front descendant de H. Ces données restent bloquées sur le bus S1 jusqu'au front descendant suivant. Elles ne seront effectivement introduites dans le circuit CTC que pendant la deuxième période d'horloge.

La ligne c représente un signal de validation d'écriture WE. Ce signal définit le moment pendant lequel les données à écrire, présentes sur le bus E1 après le front descendant de l'horloge H, sont reportées sur les lignes de bit de la mémoire. Le signal WE peut être activé par l'apparition de données lues sur le bus S1 et désactivé par le front remontant de l'horloge H.

## Revendications

1. Circuit intégré de traitement numérique de signal, réalisant une transformation de signaux d'entrée représentant une matrice de valeurs numériques x(i,j), où i est un indice de ligne et j un indice de colonne de la matrice pour produire des signaux de sortie représentant des coefficients C(u,v), par une double sommation, en ligne et en colonne, de la forme

7

$$C(u,v) = \sum_{i=0}^{i=n-1} C^i(v)\, g\,(i,u)$$

avec

$$Ci_{(v)} = \sum_{j=0}^{j=n-1} x\,(i,j)\, f\,(j,v)$$

caractérisé en ce qu'il comporte

- un premier circuit de sommation (CTL) apte à recevoir les signaux représentant les valeurs numériques x-(i,j) et à produire des signaux représentant les valeurs $C^i(v)$

- une mémoire tampon (MEM) apte à enregistrer les signaux $C^i(V)$ puis à les restituer, l'adressage de cette mémoire étant organisé en n lignes et en n colonnes

- un deuxième circuit de sommation (CTL) apte à recevoir en succession les signaux représentant les valeurs $C^i(v)$ et à produire des signaux représentant des valeurs C(u, v),

- un séquenceur (CPT, MUX) d'adressage de la mémoire, pour fournir à la mémoire des adresses successives de données $C^i(v)$ à enregistrer en provenance du premier circuit de sommation ou à restituer vers le deuxième circuit de sommation,

- le séquenceur fournissant alternativement une succession de n x n adresses, ligne par ligne, puis une succession de n x n adresses, colonne par colonne, et une opération de lecture suivie d'une opération d'écriture étant effectuée pour chaque adresse fournie par le séquenceur.

2. Circuit intégré selon la revendication 1, caractérisé en ce que la mémoire comporte un bus d'entrée E1 et un bus de sortie S1, distincts l'un de l'autre.

3. Circuit intégré selon l'une des revendication 1 et 2 caractérisé en ce que le séquenceur d'adressage comporte un compteur de 2k + 1 bits dont la sortie de poids le plus fort commande un circuit d'aiguillage, les 2 k bits restants étant divisés en un groupe de k bits de poids forts et un groupe de k bits de poids faibles, et l'aiguillage étant apte à transmettre, selon l'état du bit qui le commande, soit les deux groupes tels qu'ils apparaissent en sortie du compteur, soit les deux groupes permutés.

4. Circuit intégré selon l'une des revendications 1 à 3, caractérisé par le fait que la mémoire est une mémoire statique.

FIG_1

FIG_2

# FIG_3

H
(13,5 MHz)

COMPTEUR    2k +1 bits    CPT

AIG

AD ( ___r___ ___s___ )

DECODEUR

MEM
n x n  mots

A M P L I S

S1 → CTC

E1 ← CTL

# FIG_4

T/2

a) H

b) S1

c) WE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 082 016  (NV PHILIPS') <br> * Figure 25; page 7, lignes 59-116 * <br> ----- | 1 | G 06 F   7/00 <br> G 06 F   15/347 |

DOMAINES TECHNIQUES RECHERCHES (Int. Cl.4)

G 06 F

Le présent rapport a été établi pour toutes les revendications

| Lieu de la recherche | Date d'achèvement de la recherche | Examinateur |
|---|---|---|
| LA HAYE | 29-02-1988 | BEINDORFF W.H. |

EPO FORM 1503 03.82 (P0402)